# EUROPEAN PATENT APPLICATION

(11) **EP 4 848 279 A1**
(43) Date of publication of application: **02.12.2026**
(21) Application number: 24919888.8
(22) Date of filing: 26.11.2024
(51) Int. Cl.: G10L 13/08, G10L 21/013

(54) **AUDIO PROCESSING METHOD AND APPARATUS, AND DEVICE AND STORAGE MEDIUM**

(30) Priority: 23.01.2024 CN 202410096064
(71) Applicant: Beijing Zitiao Network Technology Co., Ltd., Beijing 100190 (CN)
(72) Inventor: CHU, Shuting, Beijing 100028 (CN); CHEN, Manjia, Beijing 100028 (CN)
(74) Representative: Marks & Clerk LLP
(86) International application number: PCT/CN2024/134607
(87) International publication number: WO 2025/156808

(57) **Abstract**

Embodiments of the disclosure relate to an audio processing method and apparatus, a device, and a storage medium. The method provided herein includes: obtaining a first media content input by a user, the first media content including first audio content; and providing a second media content based on a selection of a target style by the user, the second media content including a second audio content generated based on the first audio content, the second audio content having the same timbre as the first audio content, and the second audio content having at least one audio attribute corresponding to the target style. In this way, the embodiments of the disclosure can improve the voice changing effect on the basis of retaining the timbre.

## Description

This application claims priority to Chinese Patent Application No. 202410096064.X, filed on January 23, 2024, and entitled "AUDIO PROCESSING METHOD, APPARATUS AND DEVICE, AND STORAGE MEDIUM", the disclosures of which is incorporated herein by reference in its entirety.

### FIELD

Example embodiments of the present disclosure generally relate to the field of computers, and more particularly, to an audio processing method, apparatus, device and computer-readable storage medium.

### BACKGROUND

With the development of computer technologies, the Internet has become an important platform for people's information interaction. During a process of people performing information interaction through the Internet, various types of audios have become important media for people to perform social expressions and exchange information. Therefore, it is expected that the audio is processed to achieve a voice changing technique capable of changing the speech style while retaining the timbre.

### SUMMARY

In a first aspect of the present disclosure, a method of audio processing is provided. The method includes: obtaining a first media content input by a user, the first media content including a first audio content; and providing a second media content based on a selection of a target style by the user, the second media content including second audio content generated based on the first audio content, the second audio content having the same timbre as the first audio content, and the second audio content having at least one audio attribute corresponding to the target style.

In a second aspect of the present disclosure, an apparatus for audio processing is provided. The apparatus includes: an obtaining module configured to obtain a first media content input by a user, the first media content including a first audio content; and a providing module configured to provide a second media content based on a selection of a target style by the user, the second media content including a second audio content generated based on the first audio content, the second audio content having the same timbre as the first audio content, and the second audio content having at least one audio attribute corresponding to the target style.

In a third aspect of the present disclosure, an electronic device is provided, the device includes at least one processing unit; and at least one memory, the at least memory being coupled to the at least one processing unit and storing instructions for execution by the at least one processing unit, the instructions, when executed by the at least one processing unit, cause the electronic device to perform the method of any one of the first to fourth aspects.

In a fourth aspect of the present disclosure, a computer readable storage medium is provided, where the computer readable storage medium stores a computer program thereon, and the computer program is executable by a processor to implement the method of any one of the first aspect to the fourth aspect.

It should be appreciated that what is described in this Summary is not intended to limit critical features or essential features of embodiments of the present disclosure, nor is it intended to limit the scope of the present disclosure. Other features of the present disclosure will become readily appreciated from the following description.

### BRIEF DESCRIPTION OF THE DRAWINGS

The above and other features, advantages, and aspects of various embodiments of the present disclosure will become more apparent with reference to the following detailed description taken in conjunction with the accompanying drawings. In the drawings, the same or similar reference numerals denote the same or similar elements, wherein:
Fig. 1 illustrates a schematic diagram of an example environment in which the embodiments according to the present disclosure can be implemented;
Fig. 2 illustrates a flowchart of an example audio processing process according to some embodiments of the disclosure;
Figs. 3A-3C illustrate schematic diagrams of example interfaces according to some embodiments of the present disclosure;
Fig. 4 illustrates a schematic structural block diagram of an example audio processing apparatus according to some embodiments of the disclosure; and
Fig. 5 illustrates a block diagram of an electronic device capable of implementing various embodiments of the present disclosure.

### DETAILED DESCRIPTION

Embodiments of the present disclosure will be described in more detail below with reference to the accompanying drawings. Although certain embodiments of the present disclosure are shown in the accompanying drawings, it should be understood that the present disclosure may be implemented in various forms and should not be construed as limited to the embodiments set forth herein, but rather, these embodiments are provided for a thorough and complete understanding of the present disclosure. It should be understood that the drawings and embodiments of the present disclosure are only for illustrative purposes and are not intended to limit the scope of the present disclosure.

It should be noted that the headings of any section/subsection provided herein are not limiting. Various embodiments are described throughout herein, and any type of embodiment can be included under any section/subsection. Furthermore, embodiments described in any section/subsection may be combined in any manner with any other embodiments described in the same section/subsection and/or different sections/subsections.

In the description of the embodiments of the present disclosure, the term "including" and the like should be understood as open-ended including, that is, "including but not limited to". The term "based on" should be read as "based at least in part on. " The term "one embodiment" or "the embodiment" should be read as "at least one embodiment". The term "some embodiments" should be understood as "at least some embodiments". Other explicit and implicit definitions may also be included below. The terms "first", "second", etc. may refer to different or identical objects. Other explicit and implicit definitions may also be included below.

Embodiments of the present disclosure may relate to data, acquisition and/or use of data, etc. by a user, all following respective legal regulations and related regulations. In embodiments of the present disclosure, all data collection, acquisition, processing, processing, forwarding, use, and the like, are made with user knowledge and confirmation. Accordingly, when implementing the embodiments of the present disclosure, the user should be informed of the types of data or information that may be involved, a usage range, a usage scene, and the like in an appropriate manner according to relevant legal regulations, and the authorization of the user is obtained. The specific informing and/or authorization manner may vary according to actual situations and application scenes, and the scope of the present disclosure is not limited in this aspect.

In the present description and the embodiments, solutions, if personal information processing is involved, are performed on the basis of legitimacy (for example, the consent of the personal information body is obtained, or necessary for fulfillment of a contract, etc.), and is performed only within a specified range or an agreed range. The user rejects personal information other than the necessary information required for processing the basic function, and the use of the basic function by the user is not affected.

In a process of information interaction by people over the Internet, people expect to use a high-quality audio processing method to conveniently achieve a desired effect of changing voice. A traditional audio processing method performs voice changing by means of a voice changer. However, the voice changer can only change the timbre of a speaker.

In view of this, an embodiment of the present disclosure provides an audio processing solution. According to the solution, first media content input by a user can be obtained, and the first media content includes first audio content. Further, a second media content may be provided based on a selection of a target style by a user, the second media content including second audio content generated based on the first audio content, the second audio content having the same timbre as the first audio content, and the second audio content having at least one audio attribute corresponding to the target style. In this way, the embodiments of the present disclosure can improve the voice change effect on the basis of retaining the timbre.

Various example implementations of the solution are described in further detail below with reference to the accompanying drawings.

### Example Environment

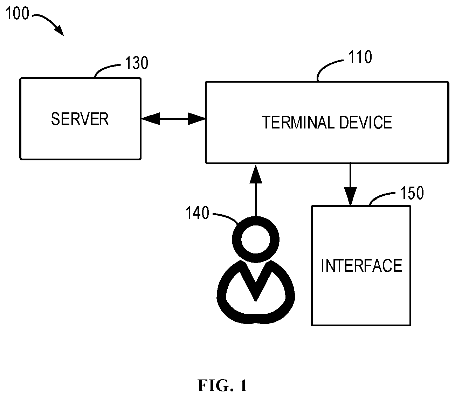

Fig. 1 illustrates a schematic diagram of an example environment 100 in which embodiments of the present disclosure can be implemented. As shown in Fig. 1, the example environment 100 may include a terminal device 110.

In this example environment 100, a terminal device 110 may run a platform that supports processing of audio. For example, voice changing may be performed on audios. The user 140 may interact with the platform via the terminal device 110 and/or attached devices thereof.

In the environment 100 of Fig. 1, if the platform is active, the terminal device 110 may present an interface 150 through the platform to support interface interaction.

In some embodiments, the terminal device 110 communicates with the server 130 to enable provision of services to the platform. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game terminal, a VR/AR device, and a Personal Communication System (PCS) device, personal navigation device, personal digital assistant (PDA), audio/video player, digital camera/camcorder, positioning device, television receiver, radio broadcast receiver, electronic book device, game device, or any combination of the foregoing, including accessories and peripherals for these devices, or any combination thereof. In some embodiments, the terminal device 110 can also support any type of interface to a user (such as 'wearable' circuitry, etc.).

The server 130 may be an independent physical server, may also be a server cluster or a distributed system formed by a plurality of physical servers, and may also be a cloud server that provides basic cloud computing services such as cloud services, cloud databases, cloud computing, cloud functions, cloud storage, network services, cloud communications, middleware services, domain name services, security services, content distribution networks, and big data and artificial intelligence platforms. The server 130 may include, for example, a computing system/server, such as a mainframe, an edge computing node, a computing device in a cloud environment, etc. The server 130 may provide background services for the application 120 supporting the virtual scene in the terminal device 110.

A communication connection may be established between the server 130 and the terminal device 110. The communication connection may be established in a wired manner or a wireless manner. The communication connection may include, but are not limited to, Bluetooth connections, mobile network connections, Universal Serial Bus (USB) connections, Wireless Fidelity (WiFi) connections, and the like, and the embodiments of the present disclosure are not limited in this regard. In an embodiment of the present disclosure, the server 130 and the terminal device 110 may achieve signaling interaction through a communication connection therebetween.

It should be understood that the structure and function of the various elements in environment 100 are described for exemplary purposes only, and are not intended to imply any limitation on the scope of the disclosure.

Some example embodiments of the present disclosure will be described below with continued reference to the accompanying drawings.

### Example Processes

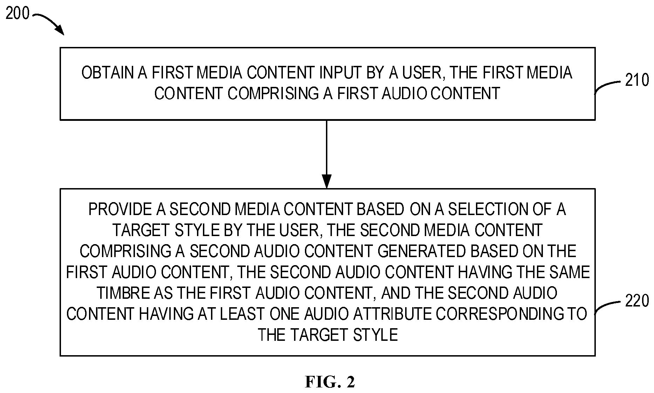

Fig. 2 illustrates a flowchart of an example process 200 for audio processing in accordance with some embodiments of the disclosure. The process 200 can be implemented at the terminal device 110. The process 200 is described below with reference to Fig. 1.

As shown in Fig. 2, at block 210, the terminal device 110 obtains first media content input by the user 140, the first media content including first audio content.

In some embodiments, the first media content that is obtained by the terminal device 110 and input by the user 140 may be first media content recorded by the user 140. For example, a user shoots a piece of video or records a piece of voice as the first media content. The first media content may include a piece of audio content, and such audio content may include, for example, speaking content or singing content of the user.

In some embodiments, the first media content that is obtained by the terminal device 110 and input by the user 140 may be first media content uploaded by the user 140. For example, a previous segment of video stored on the terminal device 110, or a previously recorded segment of voice stored may be utilized as the first media element.

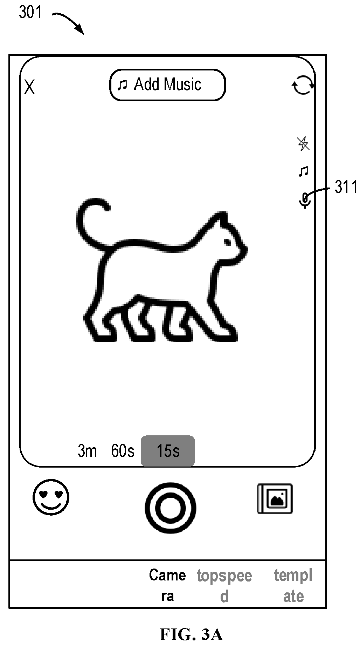

The process 200 will be described below with reference to Figs. 3A-3C. Figs. 3A-3C illustrate schematic diagrams of example interfaces 301-303 according to some embodiments of the present disclosure. The interfaces 301 to 303 may, for example, be provided by the terminal device 110 shown in Fig. 1.

As shown in Fig. 3A, the terminal device 110 obtains a video recorded by the user 140 on a shooting page, where the video includes a first audio, such as, information about words spoken by the user 140 (the photographer). Then, the user 140 clicks on the sound control 311 in the interface 301.

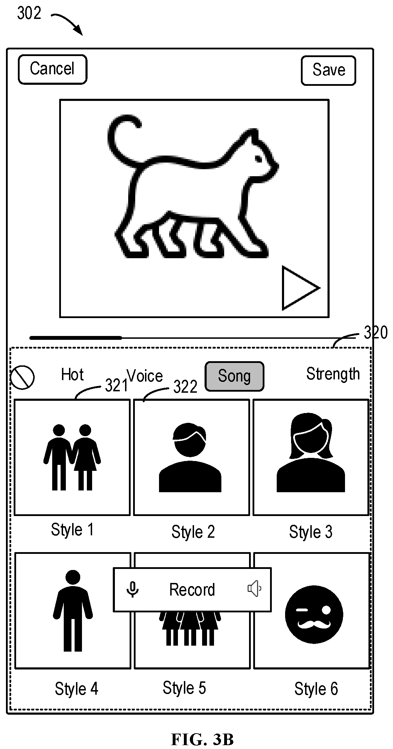

The terminal device 110 presents a selection panel 320 based on the click of the user 140. As shown in Fig. 3B, the terminal device 110 may display the selection panel 320 in the interface 302. As an example, the selection panel 320 may display audio effects of different styles, e. g., style one 321, style two 322, style three, etc.

In some embodiments, a selection panel 320 displayed by the terminal device 110 may be provided for providing a set of candidate audio effects. In some examples, the terminal device 110 obtains the speaking content input by the user 140, and the selection panel 320 may provide different styles that can be converted in response to the speaking content.

In some examples, the terminal device 110 obtains a paragraph of speech spoken by the user 140 in Mandarin, and the selection panel 320 may provide an audio effect of "English" style, an audio effect of "dialect" style, and the like. It can be understood that, if the user 140 selects an audio effect of "English" style presented on the selection panel 320, the terminal device 110 may convert "a paragraph of speech" spoken by the user 140 in Mandarin into "a paragraph of speech" in an English version formed by a timbre of the user 140. If the user 140 selects an audio effect of "dialect" style presented on the selection panel 320, the terminal device 110 may convert "a paragraph of speech" spoken by the user 140 in a dialect into "one segment of speech" formed by a timbre of the user 140. This is merely exemplary and the present disclosure is not limited thereto.

In some embodiments, the terminal device 110 receives a user's selection of a target audio effect of a set of candidate audio effects. The target audio effect corresponds to a target genre. For example, the terminal device 110 may receive an "English" style, or a "certain dialect" style, or the like, selected by user 140 from the set of candidate audio effects.

With continued reference to Fig. 2, at block 220, the terminal device 110 provides second media content based on a selection of a target style by the user 140. In some embodiments, the second media content includes second audio content. The second audio content includes second audio content that is generated based on the first audio content. The second audio content has the same timbre as the first audio content. The second audio content has at least one audio attribute corresponding to a target style. In some examples, the terminal device 110 converts the first audio content into the second audio content based on a target style selected by the user 140, on the basis of preserving corresponding timbre of the first audio. The second audio content has at least one audio attribute corresponding to the target style.

In some embodiments, the second audio content has at least one audio attribute corresponding to a target style. The target audio attributes include at least pitch, or rhythm, etc. For example, if the pitch of the first audio content includes a key of A, the second audio content at least retains the key of A.

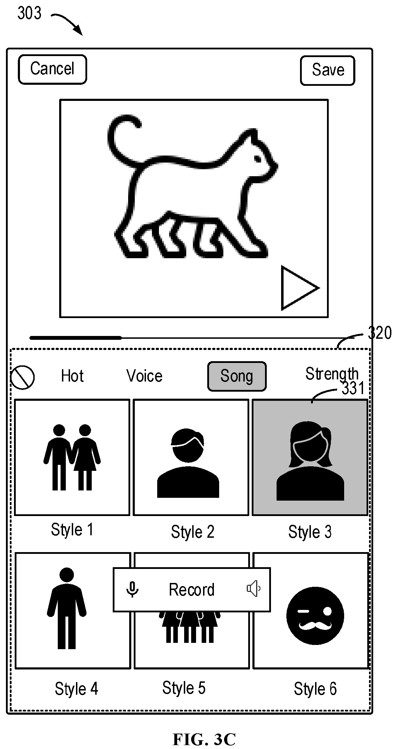

Using Fig. 3C as an example, the user 140 selects style three 331 on the selection panel 320 as the target style. The terminal device 110 receives the user's 140 selection and converts the first audio content of the first media content into the second audio content of the second media content.

In some examples, when the terminal device 110 obtains the speaking content input by the user 140, and can change the speech content in a different style. For example, "a paragraph of speech" (first audio content) spoken in a Mandarin and input by the user 140 is converted into "a paragraph of speech" (second audio content) spoken in a "dialect" style that is the same timbre as the user 140. The terminal device 110 calls the server 130 to convert the first audio content and provide the second audio content, based on the user's selection of the target genre.

In the embodiment of the present disclosure, in this way, the user can hear the effect the user speaks in other styles with his own timbre at a low cost.

Generation of the second media content is described below. The terminal device 110 generates the second audio content according to the first audio content included in the first media content. In some embodiments, the terminal device 110 adjusts a play speed of the video content of the first video content included in the first media content, according to the second audio content. In some embodiments, the terminal device 110 determines the audio portion of the second audio content corresponding to the target content, and a video portion of the visual content corresponding to the target content. Thus, the play speed of the video portion is adjusted, so that the video portion is synchronous with the audio portion. In some examples, the target content may be "one paragraph of speech", "one sentence", "one word", or "one character", or the like.

In some examples, the terminal device 110 converts "a paragraph of speech" spoken in Mandarin and input by the user 140 into "a paragraph of speech" having the same timbre as the user 140 and spoken in a "dialect" style. The terminal device 110 then determines an audio portion of the second audio content corresponding to "a paragraph of speech", and determines a video portion of the visual content of the first video content corresponding to "a paragraph of speech". Subsequently, the terminal device 110 adjusts the play speed of the video portion based on the determined audio portion and video portion, thereby synchronizing the video portion with the audio portion.

In some embodiments, the terminal device 110 generates the second video content as the second media content, according to the second audio content and the adjusted visual content. According to the embodiments of the present disclosure, the play speed of the visual content of the first video content is adjusted to adapt to the second audio content obtained after the voice changing, so that the inconsistency of sound and picture can be reduced on the basis of retaining the timbre.

The generation of the second audio content is described below. The terminal device 110 extracts the first audio content from the first media content. Subsequently, the terminal device 110 inputs the first audio content into a target model to obtain the second audio content. In some embodiments, the target model may be a model that is trained by a server according to sample data corresponding to a target genre.

In some embodiments, the target model includes a speech recognition module, a style conversion module, a speech generation module. The language identification module is configured to determine text content corresponding to the first audio content through the terminal device 110. In some examples, the terminal device 110 sends the first audio content input by the user 140 to the server 130. The server 130 converts the first audio content into text content by calling a voice recognition module in the target model. The server 130 sends the text content corresponding to the first audio content to the terminal device 110. The terminal device 110 determines the text content corresponding to the first audio content.

In some embodiments, the style conversion module is configured to convert the text content into a first feature corresponding to a target style. In some examples, the first feature indicates at least a stress conversion style corresponding to the target style. In some examples, the terminal device 110 sends the text content corresponding to the first audio content and the target style selected by the user 140 to the server 130. The server 130 converts the text content into the first feature corresponding to the target style by using the style conversion module in the target model. For example, a time-varying content feature of utterance in a source accent or speech style are mapped to a content feature in a target accent or speech style.

In some embodiments, the speech generation module is configured to generate the intermediate audio content based on the first feature and the second feature. The second feature is configured to characterize a timbre of the first audio content. In some embodiments, the speech generation module further includes a diffusion model. In some examples, the server 130 generates intermediate audio content according to its generated first feature and the second features configured for characterizing a timbre of the first audio content. The server 130 sends the generated intermediate audio to the terminal device 110.

For example, the target model is a bottleneck-to-bottleneck (namely, BN2BN) model, which maps a time-varying content feature of an utterance in a source accent or voice style to a content feature in the target accent or voice style. Then, a condition for speech conversion with zero-shot is performed by the denoising diffusion probability model (diffusion model).

For a product-oriented model, time-varying content features (e. g., BN L10) are processed using intermediate bottleneck features extracted in a pre-trained Automatic Speech Recognition ASR model. The diffusion model adopts a stress conversion content feature of the BN2BN model and an utterance-level speaker embedding as an adjustment signal to enable fast voice conversion, that is, the timbre of any source speaker, which is not seen during training, is kept.

The embodiments of the present disclosure can realize zero-shot identity-preserving accent and voice style conversion by processing first audio content using a target model and generating second audio content.

In conclusion, in the embodiments of the present disclosure, a first audio content included in first media content input by a user is obtained, and a second media content including second audio content having the same timbre as that of the first audio content is provided according to a target genre selected by the user. Correspondingly, the second audio content has at least one audio attribute corresponding to a target style, and thus, a voice changing effect can be improved on the basis of retaining the timbre. Further, by adjusting the play speed of the visual content of the first video content to adapt to the second audio content obtained after voice changing, the effect of synchronization of sound and picture can be achieved on the basis of retaining the timbre.

### Example Apparatus and Device

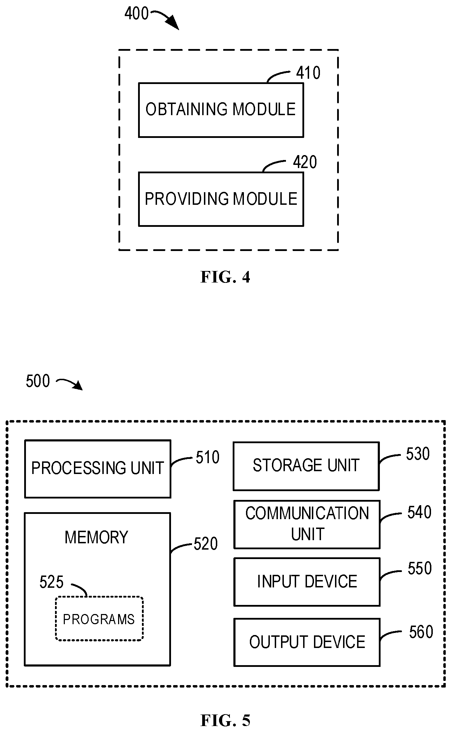

Embodiments of the present disclosure also provide a corresponding apparatus for implementing the methods or processes described above. Fig. 4 illustrates a schematic structural block diagram of an example apparatus 400 for audio processing according to certain embodiments of the present disclosure. The apparatus 400 may be implemented as or included in a terminal device 110. The various modules/components in the apparatus 400 may be implemented by hardware, software, firmware, or any combination thereof.

As shown in Fig. 4, the apparatus 400 includes an obtaining module 410 configured to obtain first media content input by a user, the first media content including first audio content.

The apparatus 400 also includes a providing module 420 configured to provide second media content based on a selection of a target style by the user, the second media content including second audio content generated based on the first audio content, the second audio content having the same timbre as the first audio content, and the second audio content having at least one audio attribute corresponding to the target style.

In some embodiments, the at least one audio attribute includes at least one of: pitch, or rhythm.

In some embodiments, the providing module 420 further includes a selecting module configured to display a selection panel, wherein the selection panel provides a set of candidate audio effects; and receive a selection of a target audio effect in the set of audio effects by the user, wherein the target audio effect corresponds to the target style.

In some embodiments, the providing module 420 further includes a generating module configured to generate the second audio content based on the first audio content; adjust a play speed of visual content of the first video content based on the second audio content; and generate based on the second audio content and the adjusted visual content, second video content as the second media content.

In some embodiments, the providing module 420 further includes an adjusting module configured to determine an audio portion of the second audio content corresponding to target content and a video portion of the visual content corresponding to the target content; and adjust a play speed of the video portion, so that the video portion is synchronous with the audio portion.

In some embodiments, the first media content includes a first video content, and the obtaining module 410 is further configured to obtain the first media content recorded by the user; and obtain the first media content uploaded by the user.

In some embodiments, the generating module is further configured to extract the first audio content from the first media content; and process the first audio content by using a target model to generate the second audio content, wherein the target model is trained based on sample data corresponding to the target style.

In some embodiments, the target model includes: a speech recognition module configured to determine text content corresponding to the first audio content; a style conversion module configured to convert the text content into a first feature corresponding to the target style; and a speech generation module configured to generate an intermediate audio content based on the first feature and the second feature, the second feature being configured to characterize a timbre of the first audio content.

In some embodiments, the speech generation module includes a diffusion model.

In some embodiments, the first feature indicates at least a stress conversion style corresponding to the target style.

Fig. 5 illustrates a block diagram of an electronic device 500 in which one or more embodiments of the present disclosure may be implemented. It should be appreciated that the electronic device 500 shown in Fig. 5 is merely exemplary and should not constitute any limitation on the functionality and scope of the embodiments described herein. The electronic device 500 shown in Fig. 5 may be used to implement the terminal device 110 of Fig. 1.

As shown in Fig. 5, the electronic device 500 is in the form of a general-purpose electronic device. The components of the electronic device 500 may include, but are not limited to, one or more processors or processing units 510, a memory 520, a storage device 530, one or more communication units 540, one or more input devices 550, and one or more output devices 560. The processing unit 510 may be a real or virtual processor and may be capable of performing various processes according to programs stored in the memory 520. In a multiprocessor system, a plurality of processing units execute computer executable instructions in parallel to improve the parallel processing capability of the electronic device 500.

The electronic device 500 typically includes a number of computer storage media. Such media may be any available media that are accessible by electronic device 500, including, but not limited to, volatile and non-volatile media, removable and non-removable media. The memory 520 may be a volatile memory (e. g., a register, cache, random access memory (RAM)), non-volatile memory (e.g., read-only memory (ROM), electrically erasable programmable read-only memory (EEPROM), flash memory), or some combination thereof. The storage device 530 may be a removable or non-removable medium and may include a machine-readable medium such as a flash drive, a magnetic disk, or any other medium that can be used to store information and/or data and that can be accessed within the electronic device 500.

The electronic device 500 may further include additional removable/non-removable, volatile/nonvolatile storage media. Although not shown in Fig. 5, a magnetic disk drive for reading from or writing to a removable, nonvolatile magnetic disk such as a "floppy disk" and an optical disk drive for reading from or writing to a removable, nonvolatile optical disk may be provided. In these cases, each drive may be connected to a bus (not shown) by one or more data media interfaces. The memory 520 may include a computer program product 525 having one or more program modules configured to perform various methods or actions of various embodiments of the present disclosure.

The communication unit 540 implements communication with other electronic devices through a communication medium. In addition, functions of components of the electronic device 500 may be implemented by a single computing cluster or a plurality of computing machines, and these computing machines can communicate through a communication connection. Thus, the electronic device 500 may operate in a networked environment using logical connections to one or more other servers, network personal computers (PCs), or another network node.

The input device 550 may be one or more input devices such as a mouse, keyboard, trackball, etc. The output device 560 may be one or more output devices such as a display, speaker, printer, etc. The electronic device 500 may also communicate with one or more external devices (not shown) such as a storage device, a display device, or the like through the communication unit 540 as required, and communicate with one or more devices that enable a user to interact with the electronic device 500, or communicate with any device (e. g., a network card, a modem, or the like) that enables the electronic device 500 to communicate with one or more other electronic devices. Such communication may be performed via an input/output (I/O) interface (not shown).

According to an exemplary implementation of the present disclosure, a computer readable storage medium is provided, on which a computer-executable instruction is stored, wherein the computer executable instruction is executed by a processor to implement the above-described method. According to an exemplary implementation of the present disclosure, there is also provided a computer program product, which is tangibly stored on a non-transitory computer readable medium and includes computer-executable instructions that are executed by a processor to implement the method described above.

Aspects of the present disclosure are described herein with reference to flowchart and/or block diagrams of methods, apparatus, devices and computer program products implemented in accordance with the present disclosure. It will be understood that each block of the flowcharts and/or block diagrams and combinations of blocks in the flowchart and/or block diagrams can be implemented by computer readable program instructions.

These computer readable program instructions may be provided to a processing unit of a general-purpose computer, special purpose computer, or other programmable data processing apparatus to produce a machine, such that the instructions, which execute via the processing unit of the computer or other programmable data processing apparatus, create means for implementing the functions/actions specified in one or more blocks of the flowchart and/or block diagrams. These computer readable program instructions may also be stored in a computer readable storage medium that can direct a computer, a programmable data processing apparatus, and/or other devices to function in a particular manner, such that the computer readable medium storing the instructions includes an article of manufacture including instructions which implement various aspects of the functions/actions specified in one or more blocks of the flowchart and/or block diagrams.

The computer readable program instructions may be loaded onto a computer, other programmable data processing apparatus, or other devices, causing a series of operational steps to be performed on a computer, other programmable data processing apparatus, or other devices, to produce a computer implemented process such that the instructions, when being executed on the computer, other programmable data processing apparatus, or other devices, implement the functions/actions specified in one or more blocks of the flowchart and/or block diagrams.

The flowcharts and block diagrams in the drawings illustrate the architecture, functionality, and operations of possible implementations of the systems, methods and computer program products according to various implementations of the present disclosure. In this regard, each block in the flowchart or block diagram may represent a module, segment, or portion of instructions which includes one or more executable instructions for implementing the specified logical function(s). In some alternative implementations, the functions marked in the blocks may occur in a different order than those marked in the drawings. For example, two consecutive blocks may actually be executed in parallel, or they may sometimes be executed in reverse order, depending on the function involved. It should also be noted that each block in the block diagrams and/or flowcharts, as well as combinations of blocks in the block diagrams and/or flowcharts, may be implemented using a dedicated hardware-based system that performs the specified function or operations, or may be implemented using a combination of dedicated hardware and computer instructions.

Various implementations of the disclosure have been described as above, the foregoing description is exemplary, not exhaustive, and the present application is not limited to the implementations as disclosed. Many modifications and variations will be apparent to those of ordinary skill in the art without departing from the scope and spirit of the implementations as described. The selection of terms used herein is intended to best explain the principles of the implementations, the practical application, or improvements to technologies in the marketplace, or to enable those skilled in the art to understand the implementations disclosed herein.

## Claims

1. A method of audio processing, comprising:
obtaining a first media content input by a user, the first media content comprising a first audio content; and
providing a second media content based on a selection of a target style by the user, the second media content comprising a second audio content generated based on the first audio content, the second audio content having the same timbre as the first audio content, and the second audio content having at least one audio attribute corresponding to the target style.

2. The method of claim 1, wherein the at least one audio attribute comprises at least one of pitch, or rhythm.

3. The method of claim 1 or 2, further comprising:
displaying a selection panel, wherein the selection panel provides a set of candidate audio effects; and
receiving a selection of a target audio effect in the set of audio effects by the user, the target audio effect corresponding to the target style.

4. The method of claim 1 or 2, wherein the first media content comprises a first video content, and the second media content is generated by:
generating the second audio content based on the first audio content;
adjusting a play speed of a visual content of the first video content based on the second audio content; and
generating, based on the second audio content and the adjusted visual content, a second video content as the second media content.

5. The method of claim 4, wherein adjusting the play speed of the visual content of the first video content based on the second audio content comprises:
determining an audio portion in the second audio content corresponding to target content and a video portion in the visual content corresponding to the target content; and
adjusting a play speed of the video portion, so that the video portion is synchronous with the audio portion.

6. The method of claim 1 or 4, wherein obtaining the first media content input by the user comprises:
obtaining the first media content recorded by the user; and
obtaining the first media content uploaded by the user.

7. The method of claim 1 or 5, wherein the second audio content is generated by:
extracting the first audio content from the first media content; and
processing the first audio content by using a target model to generate the second audio content, wherein the target model is trained based on sample data corresponding to the target style.

8. The method of claim 7, wherein the target model comprises:
a speech recognition module configured to determine a text content corresponding to the first audio content;
a style conversion module configured to convert the text content into a first feature corresponding to the target style; and
a speech generation module configured to generate an intermediate audio content based on the first feature and a second feature for characterizing a timbre of the first audio content.

9. The method of claim 8, wherein the speech generation module comprises a diffusion model.

10. The method of claim 8, wherein the first feature indicates at least a stress conversion style corresponding to the target style.

11. An apparatus for audio processing, comprising:
an obtaining module configured to obtain a first media content input by a user, the first media content comprising a first audio content; and
a providing module configured to provide a second media content based on a selection of a target style by the user, the second media content comprising a second audio content generated based on the first audio content, the second audio content having the same timbre as the first audio content, and the second audio content having at least one audio attribute corresponding to the target style.

12. An electronic device, comprising:
at least one processing unit;
at least one memory coupled to the at least one processing unit and storing instructions for execution by the at least one processing unit, wherein the instructions, when executed by the at least one processing unit, cause the electronic device to perform the method according to any one of claims 1 to 10.

13. A computer readable storage medium, on which a computer program is stored, wherein the computer program is executable by a processor to implement the method according to any one of claims 1 to 10.
